# EUROPEAN PATENT APPLICATION

(11) **EP 4 277 013 A1**
(43) Date of publication of application: **15.11.2023**
(21) Application number: 22882585.7
(22) Date of filing: 23.09.2022
(51) Int. Cl.: H01M 50/682, H01M 50/609, H01M 50/636

(54) **BATTERY CELL, BATTERY AND ELECTRIC DEVICE**

(30) Priority: 20.10.2021 CN 202122529597 U
(71) Applicant: Contemporary Amperex Technology Co., Limited, Ningde, Fujian 352100 (CN)
(72) Inventor: HONG, Zonghan, Ningde, Fujian 352100 (CN); SHI, Shengyun, Ningde, Fujian 352100 (CN)
(74) Representative: Rowlands, Stuart Michael
(86) International application number: PCT/CN2022/121103
(87) International publication number: WO 2023/065974

(57) **Abstract**

The present application relates to the technical field of batteries, in particular to a battery cell, a battery and an electric device. The battery cell comprises: a case body having a top end and a bottom end; a battery cell body mounted in the case body, a gap being present between an outer wall of the battery cell body and an inner wall of the case body; an upper cap covering the top end and provided with an electrolyte injection hole and a gas discharge hole, the electrolyte injection hole and the gas discharge hole being both in communication with the gap; and a conduit having one end connected to the electrolyte injection hole and the other end extending into the gap and then toward the bottom end. The upper cap of the battery cell of the present application is provided with the electrolyte injection hole and the gas discharge hole which are both in communication with the gap, an electrolyte enters the gap from the electrolyte injection hole to achieve electrolyte infiltration, and gas generated during the infiltration is discharged from the gas discharge hole under negative pressure, which can improve the liquid injection efficiency. The conduit is connected to the electrolyte injection hole, and extends into the gap and then toward the bottom end, and the electrolyte infiltration from the bottom to the top can be achieved by means of the conduit, thereby effectively avoiding the problem of a middle portion interface of the battery cell.

## Description

### TECHNICAL FIELD

This application relates to the field of battery technologies, and in particular, to a battery cell, a battery, and an electric apparatus.

### BACKGROUND

As an efficient energy storage device, , and due to their advantages such as high energy density, low self-discharge, and long cycle life, have become the main solution for mobile energy, lithium-ion batteries have been widely used in mobile phones, computers, electric vehicles, home energy storage, and many other fields.

Electrolyte infiltration is an important production process for lithium batteries, and directly affects the cycle life of the batteries. During electrolyte infiltration, existing batteries have difficulties in cell infiltration, interface problems, electrolyte injection and degassing of battery cells, and the like.

### SUMMARY

This application provides a battery cell, a battery, and an electric apparatus, so as to solve difficulties during electrolyte infiltration of existing batteries in cell infiltration, interface problems, electrolyte injection and degassing of battery cells, and the like.

This application provides a battery cell. The battery cell includes an outer housing, a cell body, an upper cover, and a conduit. The outer housing has a top end and a bottom end; the cell body is mounted inside the outer housing; a gap is present between an outer wall of the cell body and an inner wall of the outer housing; the upper cover covers the top end; the upper cover is provided with an electrolyte injection hole and a degassing hole; the electrolyte injection hole and the degassing hole are both in communication with the gap; and one end of the conduit is connected to the electrolyte injection hole, and the other end extends into the gap and toward the bottom end.

In this solution, the battery cell includes the outer housing, the cell body, the upper cover, and the conduit, and the gap is designed between the outer wall of the cell body and the inner wall of the outer housing for accommodating an electrolyte. The upper cover is provided with the electrolyte injection hole and the degassing hole, and the electrolyte injection hole and the degassing hole are both in communication with the gap, such that the electrolyte can enter the gap through the electrolyte injection hole during electrolyte injection for electrolyte infiltration. In addition, gas generated during the infiltration can be discharged under negative pressure from the degassing hole to reduce the pressure in the gap, which makes the electrolyte injection smoother, thereby improving electrolyte injection efficiency. One end of the conduit is connected to the electrolyte injection hole, the other end extends into the gap and toward the bottom end, and the conduit plays a guiding role. During the electrolyte infiltration, the electrolyte enters from the electrolyte injection hole and is guided by the conduit to the bottom of the gap, which allows the electrolyte to infiltrate from the bottom to the top of the gap for bottom-up electrolyte infiltration. This can effectively avoid middle interface problems caused by top-down electrolyte infiltration, and improve infiltration effect. In addition, infiltration in this manner is more convenient and safer.

In an optional arrangement, the electrolyte injection hole and the degassing hole are both provided in alignment with the gap.

In this solution, the electrolyte injection hole and the degassing hole are both provided in alignment with the gap, such that the electrolyte can directly enter the gap through the electrolyte injection hole during the electrolyte injection, and gas generated in the gap during the electrolyte injection can be discharged from the degassing hole conveniently and effectively, thereby improving the electrolyte injection efficiency.

In an optional arrangement, the electrolyte injection hole is provided on one end of the upper cover, and the degassing hole is provided on an end of the upper cover facing away from the electrolyte injection hole.

In this solution, the electrolyte injection hole is provided on one end of the upper cover, the degassing hole is provided on the end of the upper cover facing away from the electrolyte injection hole, and the position of the electrolyte injection hole is offset from the central position of the cell body, such that there is no interference between the electrolyte and the middle interface of the cell body during the electrolyte injection, thereby avoiding the middle interface problems of the battery cell.

In an optional arrangement, the gap includes a first gap and a second gap;
the cell body has a first arc-shaped protrusion and a second arc-shaped protrusion on one side, the first gap is present between an outer wall of the first arc-shaped protrusion, an outer wall of the second arc-shaped protrusion, and the inner wall of the outer housing, and the electrolyte injection hole is aligned with the first gap; and
the cell body has a third arc-shaped protrusion and a fourth arc-shaped protrusion on a side facing away from the first arc-shaped protrusion, the second gap is present between an outer wall of the third arc-shaped protrusion, an outer wall of the fourth arc-shaped protrusion, and the inner wall of the outer housing, and the degassing hole is aligned with the second gap.

In this solution, the gap includes the first gap and the second gap, the first gap is formed between the outer walls of the first arc-shaped protrusion and the second arc-shaped protrusion on one side of the cell body and the inner wall of the outer housing, and the second gap is formed between the outer walls of the third arc-shaped protrusion and the fourth arc-shaped protrusion on the side of the cell body facing away from the first arc-shaped protrusion and the inner wall of the outer housing. The electrolyte injection hole is aligned with the first gap and the degassing hole is aligned with the second gap, which takes full advantage of the structure of the cell body to design the positions of the electrolyte injection hole and the degassing hole, facilitating the arrangement of the conduit, promoting degassing under negative pressure in the gap, and making the overall structure of the battery cell compact. In addition, there is no interference between the electrolyte and the center part of the cell body during the electrolyte injection, thereby avoiding the middle interface problems of the battery cell.

In an optional arrangement, there is a distance a between an end of the conduit facing away from the electrolyte injection hole and the bottom end, where the distance a satisfies 5 mm ≤ a ≤ 7 mm.

In this solution, there is the distance a between the end of the conduit facing away from the electrolyte injection hole and the bottom end, and the presence of the distance a can allow the electrolyte to be smoothly discharged from the conduit. In addition, the distance a is limited to be greater than or equal to 5 mm and less than or equal to 7 mm, so that the electrolyte in the conduit can quickly reach the bottom end, thereby effectively implementing the bottom-up electrolyte infiltration.

In an optional arrangement, the electrolyte injection hole and the degassing hole both have a hole diameter greater than or equal to 2 mm and less than or equal to 4 mm.

In this solution, the hole diameters of both the electrolyte injection hole and the degassing hole are limited to be greater than or equal to 2 mm and less than or equal to 4 mm, so that the electrolyte can effectively enter the gap through the electrolyte injection hole, and the gas in the gap can be effectively discharged from the degassing hole, thereby effectively improving the electrolyte injection efficiency.

In an optional arrangement, the battery cell further includes an insulating bottom supporting plate mounted on the bottom end.

In this solution, the insulating bottom supporting plate can be configured to support the cell body and also to separate the cell body from the bottom end of the outer housing for insulation.

In an optional arrangement, the battery cell further includes a first sealing member detachably mounted in the electrolyte injection hole.

In this solution, the first sealing member is used to seal the electrolyte injection hole.

In an optional arrangement, the battery cell further includes a second sealing member detachably mounted in the degassing hole.

In this solution, the second sealing member is used to seal the degassing hole.

This application provides a battery including the battery cell in the foregoing embodiments.

This application provides an electric apparatus including the battery in the foregoing embodiment, where the battery is configured to supply electric energy.

Advantages of the technical solutions of this application.

A battery cell of this application includes an outer housing, a cell body, an upper cover, and a conduit, and a gap is present between an outer wall of the cell body and an inner wall of the outer housing for accommodating an electrolyte. The upper cover covers the outer housing to play a sealing role, preventing the electrolyte from overflowing. The upper cover is provided with an electrolyte injection hole and a degassing hole, and the electrolyte injection hole and the degassing hole are both in communication with the gap, such that the electrolyte enters the gap through the electrolyte injection hole for electrolyte infiltration. In addition, gas generated during the infiltration is discharged under negative pressure from the degassing hole, thereby improving electrolyte injection efficiency. One end of the conduit is connected to the electrolyte injection hole, and the other end extends into the gap and toward the bottom end, such that during the electrolyte infiltration, the electrolyte enters from the electrolyte injection hole and is guided by the conduit to the bottom of the gap for bottom-up electrolyte infiltration. This can effectively avoid middle interface problems caused by top-down electrolyte infiltration.

It should be understood that the foregoing general description and the following detailed description are only exemplary and are not intended to limit this application.

### BRIEF DESCRIPTION OF DRAWINGS

FIG. 1 is a schematic structural diagram of a battery cell according to this application;
FIG. 2 is a schematic exploded view of a battery cell according to this application;
FIG. 3 is a top view of a battery cell according to this application from one angle;
FIG. 4 is a cross-sectional view in direction A-A in FIG. 3;
FIG. 5 is an enlarged view of position E in FIG. 4;
FIG. 6 is an enlarged view of position B in FIG. 4;
FIG. 7 is a top view of a battery cell according to this application from another angle;
FIG. 8 is a cross-sectional view in direction C-C in FIG. 7; and
FIG. 9 is an enlarged view of position D in FIG. 8.

In the accompanying drawings, the figures are not necessarily drawn to scale.

### Reference signs:

1. outer housing;
   11. top end;
   12. bottom end;
2. cell body;
   20. gap;
      201. first gap;
      202. second gap;
   21. first arc-shaped protrusion;
   22. second arc-shaped protrusion;
   23. third arc-shaped protrusion;
   24. fourth arc-shaped protrusion;
3. upper cover;
   31. electrolyte injection hole;
   32. degassing hole;
4. conduit;
5. insulating bottom supporting plate;
6. first sealing member; and
7. second sealing member.

The accompanying drawings herein are incorporated into this specification and form a part of this specification, illustrate embodiments conforming to this application, and are intended to explain the principle of this application together with this specification.

### DESCRIPTION OF EMBODIMENTS

To better understand the technical solutions of this application, the following describes the embodiments of this application in detail with reference to the accompanying drawings.

It will be apparent that the described embodiments are only some but not all of the embodiments of this application. All other embodiments obtained by persons of ordinary skill in the art based on the embodiments of this application without creative efforts shall fall within the protection scope of this application.

The terms used in the embodiments of this application are merely intended to describe specific embodiments, but not intended to limit this application. The singular forms preceded by "a/an", "the", and "such" used in the embodiments and the appended claims of this application are also intended to include their plural forms, unless otherwise specified expressly in the context.

It should be understood that, the term "and/or" used in this specification is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between the contextually associated objects.

It should be noted that the orientation terms such as "above", "under", "left", and "right" described in the embodiments of this application refer to orientations as seen from the angles shown in the accompanying drawings, and should not be understood as limitations on the embodiments of this application. In addition, in the context, it should be further understood that when an element is described as being "above" or "under" another element, that element may not only be directly connected "above" or "under" the another element, but also be indirectly connected "above" or "under" the another element through an intermediate element.

In recent years, with attention on energy conservation and environmental protection and support for the new energy industry from countries around the world, electrochemical energy storage devices have been developed rapidly. As an efficient electrochemical energy storage device, and due to their advantages such as high energy density, low self-discharge, and long cycle life, have become the main solution for mobile energy, lithium-ion batteries have been widely used in mobile phones, computers, electric vehicles, home energy storage, and many other fields.

The production process of lithium-ion batteries includes processes such as slurrying, coating, calendering, slitting, cutting, lamination, tab welding, heat sealing, electrolyte injection, electrolyte impregnation, formation, and grading. Electrolyte infiltration is an important production process for lithium-ion batteries, and takes the longest time because sufficient standing can ensure thorough micro-reactions of the electrolyte on a surface of an electrode which forms a solid SEI (solid electrolyte interface, solid electrolyte interface) film. This avoids falling-off of an active substance and drastic capacity decrease of the battery caused by large groups embedding into the interior of the electrode, thereby ensuring cycle life of the battery. Sufficient standing can also make the surface of the electrode be fully infiltrated, reducing the ineffective electrode area, thereby increasing capacity of the battery. Therefore, it is important to ensure infiltration efficiency of the electrolyte for improving performance of lithium ions. In the related art, a battery cell of a lithium-ion battery generally includes an outer housing, a cell body, and an upper cover, and the cell body is mounted inside the outer housing. To inject an electrolyte into the outer housing, an electrolyte injection hole is provided in the middle of the upper cover, and the electrolyte is injected into the outer housing through the electrolyte injection hole for top-down electrolyte infiltration. Because the electrolyte injection hole is designed in the middle of the upper cover, the electrolyte is injected in alignment with the middle of the cell body during the electrolyte injection, which is prone to damage the middle interface of the cell body and causes middle interface problems, thus affecting performance of the battery cell. In addition, in this manner of top-down electrolyte infiltration, gas generated during the electrolyte injection cannot be discharged, which directly affects the infiltration efficiency of the electrolyte. Moreover, for a tall battery cell, it is difficult to infiltrate in this manner of infiltration.

In view of the problems of difficult infiltration, interface problems, electrolyte injection and degassing, and the like of existing battery cells during electrolyte infiltration, the applicant has found through research that a bottom-up electrolyte infiltration manner can be designed so that the electrolyte infiltrates from the bottom to the top of the cell body during the infiltration, which makes the infiltration more convenient and efficient. In addition, a position of the electrolyte injection hole is changed so that there is no interference between the electrolyte and the center part of the cell body during the electrolyte injection, thereby avoiding the middle interface problems. To solve the problem of degassing, a degassing hole can be designed to discharge the gas generated during the electrolyte injection in a timely manner, further improving electrolyte injection efficiency.

Based on the above considerations, to solve the problems of difficult infiltration, interface problems, electrolyte injection and degassing, and the like of the existing battery cells during the electrolyte infiltration, the inventors have designed a battery cell through in-depth research. The battery cell includes an outer housing, a cell body, an upper cover, and a conduit. The outer housing has a top end and a bottom end. The cell body is mounted inside the outer housing. A gap is present between an outer wall of the cell body and an inner wall of the outer housing for accommodating an electrolyte. The upper cover covers the top end. The upper cover is provided with an electrolyte injection hole and a degassing hole. The electrolyte injection hole and the degassing hole are both in communication with the gap. One end of the conduit is connected to the electrolyte injection hole, and the other end extends into the gap and toward the bottom end.

In such battery cell, the upper cover is provided with the electrolyte injection hole and the degassing hole, and the electrolyte injection hole and the degassing hole are both in communication with the gap, such that the electrolyte enters the gap through the electrolyte injection hole for electrolyte infiltration. In addition, gas generated during the infiltration is discharged under negative pressure from the degassing hole, thereby improving electrolyte injection efficiency. One end of the conduit is connected to the electrolyte injection hole, and the other end extends into the gap and toward the bottom end, such that during the electrolyte infiltration, the electrolyte enters from the electrolyte injection hole and is guided by the conduit to the bottom of the gap for bottom-up electrolyte infiltration. This can effectively avoid middle interface problems caused by top-down electrolyte infiltration.

The battery cell disclosed in the embodiments of this application can be applied without limitation to energy storage devices such as lithium-ion batteries, which is conducive to improving infiltration efficiency of the electrolyte and stability and cycle life of the energy storage devices.

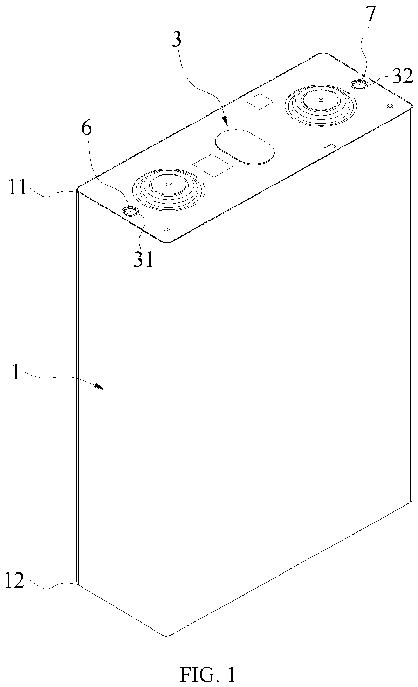

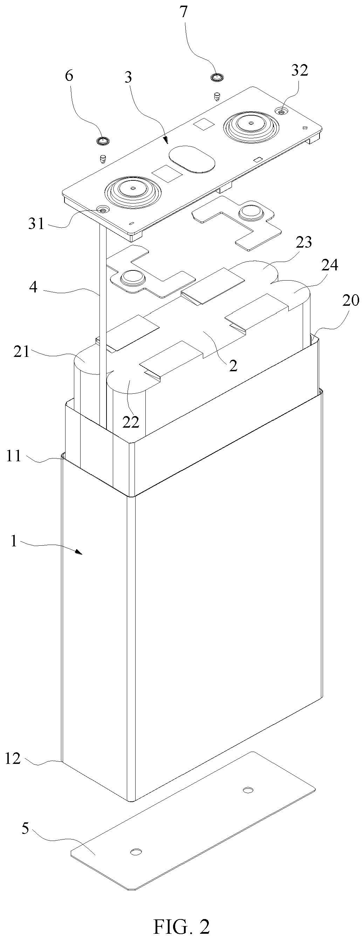

According to some embodiments of this application, as shown in FIG. 1 and FIG. 2, FIG. 1 is a schematic three-dimensional structural diagram of a battery cell according to some embodiments of this application, and FIG. 2 is an exploded view of a battery cell according to some embodiments of this application. This application provides a battery cell, and the battery cell may be a battery cell formed by a combination of winding and stacking, which is not limited in this application. The battery cell includes an outer housing 1, a cell body 2, an upper cover 3, and a conduit 4. The outer housing 1 has a top end 11 and a bottom end 12. The cell body 2 is mounted inside the outer housing 1. A gap 20 is present between an outer wall of the cell body 2 and an inner wall of the outer housing 1. The upper cover 3 covers the top end 11. The upper cover 3 is provided with an electrolyte injection hole 31 and a degassing hole 32. The electrolyte injection hole 31 and the degassing hole 32 are both in communication with the gap 20. One end of the conduit 4 is connected to the electrolyte injection hole 31, and the other end extends into the gap 20 and toward the bottom end 12.

The outer housing 1 protects the cell body 2 and provides an infiltration space for an electrolyte. The outer housing 1 may be made of steel or aluminum, but is not limited to these materials. A cross section of the outer housing 1 may be rectangular, circular, or the like, but is not limited to these shapes, which can be designed according to specific design needs. The outer housing 1 has the top end 11 and the bottom end 12. In some embodiments, the top end 11 may be designed with openings, and the bottom end 12 may be designed to be a sealing structure.

The cell body 2 is formed by cathode and anode materials and a separator, and configured to store electric energy. During charging, under the action of voltage, free electrons move toward the cathode, so that all charges of the positive electrode move to the cathode plate, forming a voltage difference. During discharging, the electrons flow out of the cathode and return to the anode through an electric device, and the voltage difference gradually decreases until all the electrons return to the anode and the voltage becomes zero. The cell body may be made into a cylindrical, soft, or prismatic pouch. The gap 20 is present between the outer wall of the cell body 2 and the inner wall of the outer housing 1 for accommodating the electrolyte.

The upper cover 3 covers the outer housing 1 to seal the outer housing 1, preventing the electrolyte from overflowing. The upper cover 3 may be integrally or detachably connected to the outer housing 1, and the detachable manner may be clamping, plugging, or the like. The upper cover 3 is provided with the electrolyte injection hole 31 and the degassing hole 32, and the electrolyte injection hole 31 and the degassing hole 32 are both in communication with the gap 20, such that the electrolyte can enter the gap 20 through the electrolyte injection hole 31 during electrolyte injection for electrolyte infiltration. In addition, gas generated during the infiltration can be discharged under negative pressure from the degassing hole 32 to reduce the pressure in the gap 20, which makes the electrolyte injection smoother, thereby improving electrolyte injection efficiency.

The conduit 4 plays a guiding role. One end of the conduit 4 is connected to the electrolyte injection hole 31, and the other end extends into the gap 20 and toward the bottom end 12, such that during the electrolyte infiltration, the electrolyte enters from the electrolyte injection hole 31 and is guided by the conduit 4 to the bottom of the gap 20, which allows the electrolyte to infiltrate from the bottom to the top of the gap 20 for bottom-up electrolyte infiltration. The conduit 4 is made of high temperature and corrosion resistant materials to prevent damage of the electrolyte to the conduit 4. The conduit 4 may be made of plastic materials such as PVC and PP, but is not limited to these materials.

The upper cover 3 is provided with the electrolyte injection hole 31 and the degassing hole 32 being both in communication with the gap 20, such that the electrolyte can enter the gap 20 through the electrolyte injection hole 31 during the electrolyte injection for electrolyte infiltration. In addition, the gas generated during the infiltration can be discharged under negative pressure from the degassing hole 32 to reduce the pressure in the gap 20, which makes the electrolyte injection smoother, thereby improving the electrolyte injection efficiency. The conduit 4 is connected to the electrolyte injection hole 31, and an end of the conduit facing away from the electrolyte injection hole 31 extends into the gap 20 and toward the bottom end 12, such that during the electrolyte infiltration, the electrolyte enters from the electrolyte injection hole 31 and is guided by the conduit 4 to the bottom of the gap 20, which allows the electrolyte to infiltrate from the bottom to the top of the gap 20 for bottom-up electrolyte infiltration. This can effectively avoid middle interface problems caused by top-down electrolyte infiltration, and improve infiltration effect. In addition, this manner of infiltration is more convenient and safer.

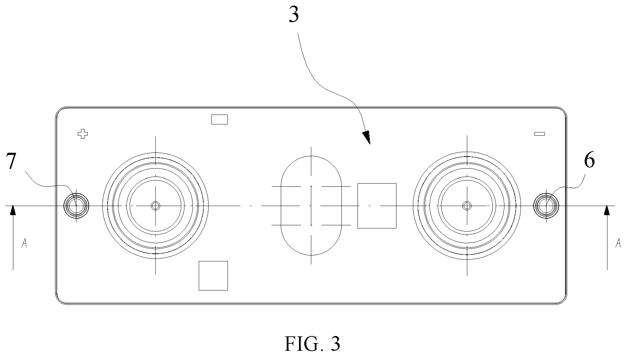

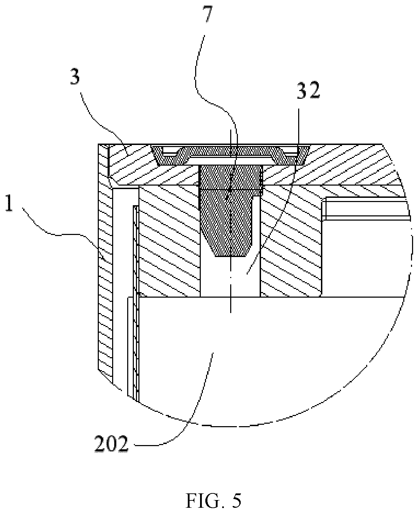

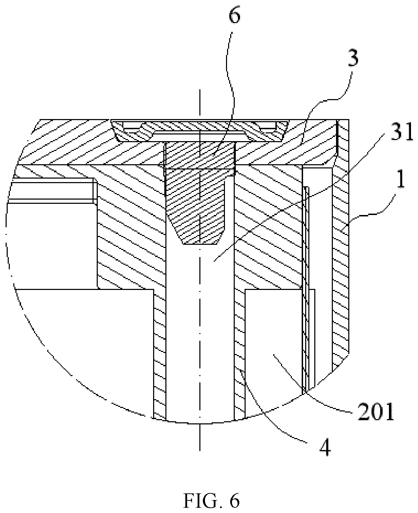

According to some specific embodiments of this application, as shown in FIG. 2 to FIG. 6, the electrolyte injection hole 31 and the degassing hole 32 are both provided in alignment with the gap 20.

The electrolyte injection hole 31 and the degassing hole 32 being both provided in alignment with the gap 20 means that outlets of the electrolyte injection hole 31 and the degassing hole 32 are aligned with an opening direction of the gap 20.

The electrolyte injection hole 31 is provided in alignment with the gap 20, such that the electrolyte can directly enter the gap 20 through the electrolyte injection hole 31 during the electrolyte injection, thereby improving the electrolyte injection efficiency. The degassing hole 32 is provided in alignment with the gap 20, such that gas generated in the gap 20 during the electrolyte injection can be discharged from the degassing hole 32 conveniently and effectively, thereby further improving the electrolyte injection efficiency.

According to some specific embodiments of this application, as shown in FIG. 2 to FIG. 6, the electrolyte injection hole 31 is provided on one end of the upper cover 3, and the degassing hole 32 is provided on an end of the upper cover 3 facing away from the electrolyte injection hole 31.

The "one end of the upper cover 3" and "an end of the upper cover 3 facing away from the electrolyte injection hole 31" respectively refer to two ends away from the central position of the upper cover 3 and along a length direction of the upper cover 3.

As compared with the solution in which the electrolyte injection hole 31 is provided in the middle of the upper cover 3, the electrolyte injection hole 31 is provided on one end of the upper cover 3, the degassing hole 32 is provided on the end of the upper cover 3 facing away from the electrolyte injection hole 31, and the position of the electrolyte injection hole 31 is offset from the central position of the cell body 2, such that there is no interference between the electrolyte and the middle interface of the cell body 2 during the electrolyte injection, thereby avoiding the middle interface problems of the battery cell.

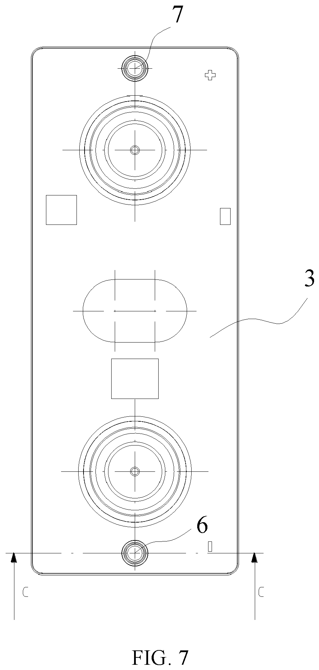

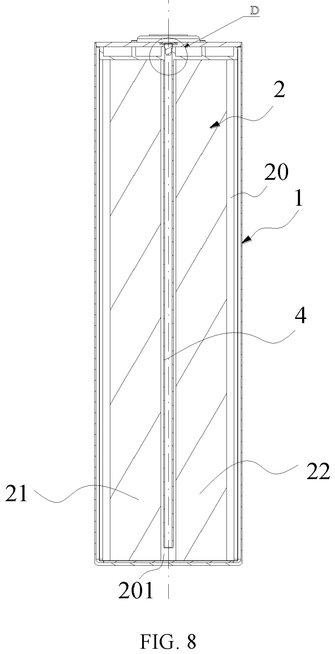

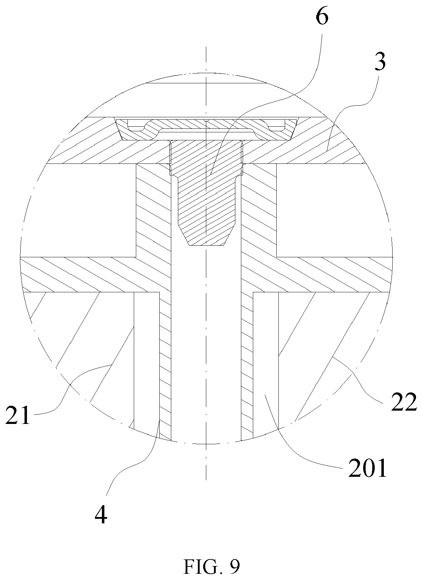

According to some specific embodiments of this application, as shown in FIG. 2 to FIG. 9, the gap 20 includes a first gap 201 and a second gap 202.

The cell body 2 has a first arc-shaped protrusion 21 and a second arc-shaped protrusion 22 on one side, and the first gap 201 is present between an outer wall of the first arc-shaped protrusion 21, an outer wall of the second arc-shaped protrusion 22, and the inner wall of the outer housing 1. The electrolyte injection hole 31 is aligned with the first gap 201.

The cell body 2 has a third arc-shaped protrusion 23 and a fourth arc-shaped protrusion 24 on a side facing away from the first arc-shaped protrusion 21, and the second gap 202 is present between an outer wall of the third arc-shaped protrusion 23, an outer wall of the fourth arc-shaped protrusion 24, and the inner wall of the outer housing 1. The degassing hole 32 is aligned with the second gap 202.

The first arc-shaped protrusion 21, the second arc-shaped protrusion 22, the third arc-shaped protrusion 23, and the fourth arc-shaped protrusion 24 are all formed by the cell body 2 protruding in an arc shape along a width direction of the cell body 2 toward the inner wall of the outer housing 1. The first arc-shaped protrusion 21 and the second arc-shaped protrusion 22 may be connected head to tail or spaced apart, and the third arc-shaped protrusion 23 and the fourth arc-shaped protrusion 24 may be connected head to tail or spaced apart. The first gap 201 is enclosed by the outer wall of the first arc-shaped protrusion 21, the outer wall of the second arc-shaped protrusion 22, and the inner wall of the outer housing 1, and the second gap 202 is enclosed by the outer wall of the third arc-shaped protrusion 23, the outer wall of the fourth arc-shaped protrusion 24, and the inner wall of the outer housing 1.

The electrolyte injection hole 31 is aligned with the first gap 201 and the degassing hole 32 is aligned with the second gap 202, which takes full advantage of the structure of the cell body 2 to design the positions of the electrolyte injection hole 31 and the degassing hole 32, facilitating the arrangement of the conduit 4, promoting degassing under negative pressure in the gap 20, and making the overall structure of the battery cell compact. In addition, there is no interference between the electrolyte and the center part of the cell body 2 during the electrolyte injection, thereby avoiding the middle interface problems of the battery cell.

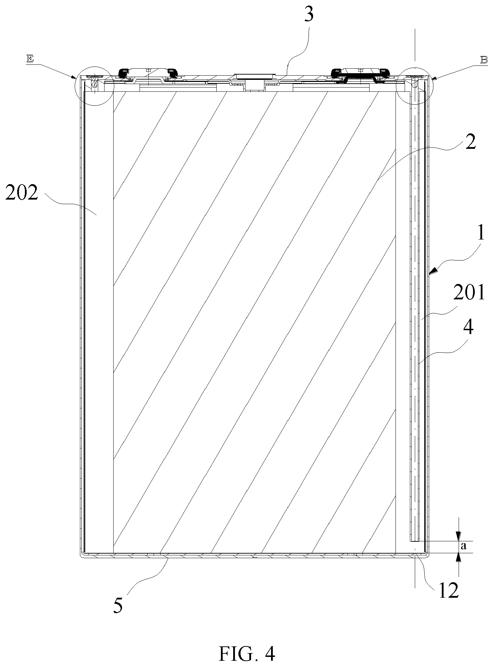

According to some specific embodiments of this application, as shown in FIG. 4, there is a distance a between an end of the conduit 4 facing away from the electrolyte injection hole 31 and the bottom end 12. Specifically, the distance a satisfies 5 mm ≤ a ≤ 7 mm.

The distance a may be selected from 5 mm, 5.5 mm, 6 mm, 6.5 mm, 7 mm, or the like, and certainly, may alternatively be other values within the foregoing range, which is not limited herein.

The distance a is formed between the end of the conduit 4 facing away from the electrolyte injection hole 31 and the bottom end 12, so that the electrolyte can be smoothly discharged from the conduit 4. In addition, the distance a is limited to be greater than or equal to 5 mm and less than or equal to 7 mm, so that the electrolyte in the conduit 4 can quickly reach the bottom end 12, thereby effectively implementing the bottom-up electrolyte infiltration. If the distance a is less than 5 mm, the end of the conduit 4 facing away from the electrolyte injection hole 31 is too close to the bottom end 12, so the electrolyte is impacted by the bottom end 12 when discharged from the conduit 4, reducing the efficiency of discharging the electrolyte. If the distance a is greater than 7 mm, the end of the conduit 4 facing away from the electrolyte injection hole 31 is too far away from the bottom end 12, so the electrolyte is prone to splash when discharged from the conduit 4, which increases the probability of generating gas, affecting the infiltration efficiency.

According to some specific embodiments of this application, the electrolyte injection hole 31 and the degassing hole 32 both have a hole diameter greater than or equal to 2 mm and less than or equal to 4 mm.

The hole diameter is a diameter size of a hole. The hole diameter of the electrolyte injection hole 31 may be selected from 2 mm, 2.5 mm, 3 mm, 3.5 mm, 4 mm, or the like, and the hole diameter of the degassing hole 32 may be selected from 2 mm, 2.5 mm, 3 mm, 3.5 mm, 4 mm, or the like. Certainly, they may alternatively be other values within the foregoing ranges, which are not limited herein.

The hole diameter of the electrolyte injection hole 31 is limited to be greater than or equal to 2 mm and less than or equal to 4 mm, so that the electrolyte can effectively enter the gap 20 through the electrolyte injection hole 31. If the hole diameter of the electrolyte injection hole 31 is less than 2 mm, the amount of the electrolyte injected per unit time during the electrolyte injection is too small, which affects the electrolyte injection speed, thereby reducing the infiltration efficiency of the electrolyte. If the hole diameter of the electrolyte injection hole 31 is greater than 4 mm, the amount of the electrolyte injected per unit time is too large, which is not conducive to operation. The hole diameter of the degassing hole 32 is limited to be greater than or equal to 2 mm and less than or equal to 4 mm, so that the gas in the gap 20 can be effectively discharged from the degassing hole 32, thereby effectively improving the electrolyte injection efficiency. If the hole diameter of the degassing hole 32 is less than 2 mm, the hole diameter of the degassing hole 32 is too small, so the gas generated during the electrolyte injection cannot be discharged in a timely and effective manner, affecting the infiltration efficiency. If the hole diameter of the degassing hole 32 is greater than 4 mm, the hole diameter of the degassing hole 32 is too large, which increases the difficulty of sealing, increasing the risk of electrolyte overflowing.

According to some specific embodiments of this application, as shown in FIG. 2, the battery cell further includes an insulating bottom supporting plate 5 mounted on the bottom end 12.

The insulating bottom supporting plate 5, being specifically disposed between the cell body 2 and the bottom end 12 and made of an insulating material, may be fixedly connected to the bottom end 12 or movably disposed on the bottom end 12 by clamping, plugging, bonding, or the like.

The insulating bottom supporting plate 5 mounted on the bottom end 12 can be configured to support the cell body 2 and also to separate the cell body 2 from the bottom end 12 of the outer housing 1 for insulation.

According to some specific embodiments of this application, as shown in FIG. 2, FIG. 3, and FIG. 7, the battery cell further includes a first sealing member 6 detachably mounted in the electrolyte injection hole 31.

The first sealing member 6 is a part for sealing the electrolyte injection hole 31 and may be made of a high temperature and corrosion resistant material to prevent damage of the electrolyte to the first sealing member 6. The detachable mounting manner may be threaded mounting, snap mounting, or the like.

The first sealing member 6 is detachably mounted in the electrolyte injection hole 31 for sealing the electrolyte injection hole 31. When the electrolyte injection is required, the electrolyte injection hole 31 is opened for injecting the electrolyte. When the electrolyte injection is not required or after the electrolyte injection is completed, the electrolyte injection hole 31 is sealed by the first sealing member 6, preventing the electrolyte from overflowing.

According to some specific embodiments of this application, as shown in FIG. 2, FIG. 3, and FIG. 7, the battery cell further includes a second sealing member 7 detachably mounted in the degassing hole 32.

The second sealing member 7 is a part for sealing the degassing hole 32 and may be made of a high temperature and corrosion resistant material to prevent damage of the electrolyte to the second sealing member 7. The detachable mounting manner may be threaded mounting, snap mounting, or the like.

The second sealing member 7 is detachably mounted in the degassing hole 32 for sealing the degassing hole 32. When the electrolyte injection is required, the degassing hole 32 is opened, which facilitates discharging the gas generated during the electrolyte injection from the degassing hole 32, reduces the pressure in the gap 20, and makes the infiltration smoother, thereby improving the infiltration efficiency. When the electrolyte injection is not required or after the electrolyte injection is completed, the degassing hole 32 is sealed by the second sealing member 7, preventing the electrolyte from overflowing.

According to some embodiments of this application, referring to FIG. 1 to FIG. 4, this application provides a battery cell. The outer housing 1 has the top end 11 and the bottom end 12, the upper cover 3 detachably covers the top end 11, and the insulating bottom supporting plate 5 is mounted on the bottom end 12. The cell body 2 is mounted inside the outer housing 1, the cell body 2 has the first arc-shaped protrusion 21 and the second arc-shaped protrusion 22 on one side, the cell body 2 has the third arc-shaped protrusion 23 and the fourth arc-shaped protrusion 24 on the side facing away from the first arc-shaped protrusion 21, and the gap 20 is present between the outer wall of the cell body 2 and the inner wall of the outer housing 1. The gap 20 includes the first gap 201 and the second gap 202, the first gap 201 is enclosed by the outer wall of the first arc-shaped protrusion 21, the outer wall of the second arc-shaped protrusion 22, and the inner wall of the outer housing 1, and the second gap 202 is enclosed by the outer wall of the third arc-shaped protrusion 23, the outer wall of the fourth arc-shaped protrusion 24, and the inner wall of the outer housing 1. The upper cover 3 is provided with the electrolyte injection hole 31 and the degassing hole 32, the electrolyte injection hole 31 is sealed by the first sealing member 6, and the degassing hole 32 is sealed by the second sealing member 7. The electrolyte injection hole 31 and the degassing hole 32 both have a hole diameter of 3 mm. The electrolyte injection hole 31 is aligned with the first gap 201, and the degassing hole 32 is aligned with the second gap 202. One end of the conduit 4 is connected to the electrolyte injection hole 31, and the other end extends into the first gap 201 and toward the bottom end 12. The distance a between the end of the conduit 4 facing away from the electrolyte injection hole 31 and the bottom end 12 is 6 mm.

During the electrolyte injection, the electrolyte enters the first gap 201 through the electrolyte injection hole 31 and is guided by the conduit 4 to the bottom of the first gap 201, which allows the electrolyte to infiltrate from the bottom to the top of the gap 20 for bottom-up electrolyte infiltration. This can effectively avoid middle interface problems caused by top-down electrolyte infiltration, and improve infiltration effect. In addition, this manner of infiltration is more convenient and safer. The gas generated during the infiltration is discharged from the degassing hole 32 to reduce the pressure in the gap 20, which makes the electrolyte injection smoother, thereby improving the electrolyte injection efficiency.

According to some embodiments of this application, this application further provides a battery including the battery cell according to any one of the foregoing solutions.

According to some embodiments of this application, this application further provides an electric apparatus including the battery according to any one of the foregoing solutions, and the battery is configured to supply electric energy to the electric apparatus.

The electric apparatus may be any one of the foregoing devices or systems using a battery.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell, **characterized by** comprising:
an outer housing (1), wherein the outer housing (1) has a top end (11) and a bottom end (12);
a cell body (2) mounted inside the outer housing (1), wherein a gap (20) is present between an outer wall of the cell body (2) and an inner wall of the outer housing (1);
an upper cover (3) covering the top end (11), wherein the upper cover (3) is provided with an electrolyte injection hole (31) and a degassing hole (32), and the electrolyte injection hole (31) and the degassing hole (32) are both in communication with the gap (20); and
a conduit (4), wherein one end of the conduit (4) is connected to the electrolyte injection hole (31), and the other end extends into the gap (20) and toward the bottom end (12).

2. The battery cell according to claim 1, **characterized in that** the electrolyte injection hole (31) and the degassing hole (32) are both provided in alignment with the gap (20).

3. The battery cell according to claim 1 or 2, **characterized in that** the electrolyte injection hole (31) is provided on one end of the upper cover (3), and the degassing hole (32) is provided on an end of the upper cover (3) facing away from the electrolyte injection hole (31).

4. The battery cell according to any one of claims 1 to 3, **characterized in that** the gap (20) comprises a first gap (201) and a second gap (202);
the cell body (2) has a first arc-shaped protrusion (21) and a second arc-shaped protrusion (22) on one side, the first gap (201) is present between an outer wall of the first arc-shaped protrusion (21), an outer wall of the second arc-shaped protrusion (22), and the inner wall of the outer housing (1), and the electrolyte injection hole (31) is aligned with the first gap (201); and
the cell body (2) has a third arc-shaped protrusion (23) and a fourth arc-shaped protrusion (24) on a side facing away from the first arc-shaped protrusion (21), the second gap (202) is present between an outer wall of the third arc-shaped protrusion (23), an outer wall of the fourth arc-shaped protrusion (24), and the inner wall of the outer housing (1), and the degassing hole (32) is aligned with the second gap (202).

5. The battery cell according to any one of claims 1 to 4, **characterized in that** there is a distance a between an end of the conduit (4) facing away from the electrolyte injection hole (31) and the bottom end (12), wherein the distance a satisfies 5 mm ≤ a ≤ 7 mm.

6. The battery cell according to any one of claims 1 to 5, **characterized in that** the electrolyte injection hole (31) and the degassing hole (32) both have a hole diameter greater than or equal to 2 mm and less than or equal to 4 mm.

7. The battery cell according to claim 1, **characterized by** comprising:
an insulating bottom supporting plate (5) mounted on the bottom end (12).

8. The battery cell according to claim 1, **characterized by** comprising:
a first sealing member (6) detachably mounted in the electrolyte injection hole (31).

9. The battery cell according to claim 1, **characterized by** comprising:
a second sealing member (7) detachably mounted in the degassing hole (32).

10. A battery, **characterized by** comprising the battery cell according to any one of claims 1 to 9.

11. An electric apparatus, **characterized by** comprising the battery according to claim 10, wherein the battery is configured to supply electric energy.
